(19) Europäisches Patentamt European Patent Office Office européen des brevets

(11) **EP 3 162 775 B1**

(12) **EUROPEAN PATENT SPECIFICATION**

(45) Date of publication and mention of the grant of the patent:
**18.03.2020 Bulletin 2020/12**

(21) Application number: **15811785.3**

(22) Date of filing: **25.06.2015**

(51) Int Cl.:
*C03C 25/10* *(2018.01)*    *C03C 25/12* *(2006.01)*
*C03C 25/24* *(2018.01)*    *C03C 25/28* *(2018.01)*
*C03C 25/62* *(2018.01)*    *G02B 6/44* *(2006.01)*

(86) International application number:
**PCT/JP2015/068411**

(87) International publication number:
**WO 2015/199199 (30.12.2015 Gazette 2015/52)**

(54) **METHOD FOR MANUFACTURING OPTICAL FIBER, AND DEVICE FOR MANUFACTURING OPTICAL FIBER**

VERFAHREN ZUR HERSTELLUNG OPTISCHER FASERN UND VORRICHTUNG ZUR HERSTELLUNG OPTISCHER FASERN

PROCÉDÉ ET DISPOSITIF DE FABRICATION DE FIBRES OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2014 JP 2014133321**

(43) Date of publication of application:
**03.05.2017 Bulletin 2017/18**

(73) Proprietor: **Furukawa Electric Co. Ltd.**
**Tokyo 100-8322 (JP)**

(72) Inventors:
• **SUYAMA, Kenichi**
  **Tokyo 100-8322 (JP)**
• **ARASHITANI, Yoshihiro**
  **Tokyo 100-8322 (JP)**
• **TANAKA, Hiroki**
  **Tokyo 100-8322 (JP)**
• **KASAHARA, Minoru**
  **Tokyo 100-8322 (JP)**
• **AKIZUKI, Kazuyoshi**
  **Tokyo 100-8322 (JP)**

(74) Representative: **Forstmeyer, Dietmar et al**
**BOETERS & LIECK**
**Oberanger 32**
**80331 München (DE)**

(56) References cited:
**WO-A1-2011/075549**    **JP-A- H0 477 331**
**JP-A- H09 156 965**    **JP-A- 2003 089 555**
**JP-A- 2003 300 755**    **JP-A- 2010 264 603**
**JP-A- 2011 256 331**

Remarks:
The file contains technical information submitted after the application was filed and not included in this specification

EP 3 162 775 B1

**Description**

TECHNICAL FIELD

The present invention relates to a method of producing an optical fiber using an ultraviolet curable resin, and an apparatus of producing the optical fiber.

BACKGROUND ART

An optical fiber is, generally, produced by coating of a resin on a surface of a bare optical fiber drawn from a preform (which is also referred to as an optical fiber preform). A coating is formed by: first, applying an ultraviolet curable resin onto an outer circumference of the bare optical fiber (which is also referred to as an optical fiber bare wire); and then irradiating the ultraviolet curable resin with ultraviolet light (UV light) to cure the ultraviolet curable resin. Moreover, the optical fiber on which the coating is formed is once wound around a bobbin, and there may be the cases of forming another further coating of the resin on the surface thereof. As a light source of UV light in a curing device for an optical fiber coating, use may be made of: a high pressure mercury lamp or a metal halide lamp, being an electrode lamp; or an H valve, a D valve, or the like, being a no-electrode lamp (an electrodeless lamp), or the like (hereinafter, described as a high pressure mercury lamp or the like).

Recently, in order to reduce power consumption in curing, attempts have been made on using, as the light source of UV light, an ultraviolet semiconductor light emitting element, such as an ultraviolet laser diode (UV-LD) or an ultraviolet light emitting diode (UV-LED) as the light source, in place of the conventional high pressure mercury lamp or the like.

For example, Patent Literature 1 discloses an ultraviolet irradiation device having: inside an ultraviolet irradiation unit, a light guide from a side of which can emit ultraviolet light; and a semiconductor light emitting element being an ultraviolet light source. According to this device, the ultraviolet light introduced into the light guide can emit the ultraviolet light from the side of the light guide in a linear shape. Thus, it is described that a sufficient accumulated-quantity of light can be obtained even when using a small number of ultraviolet light sources, and that curability of a coating resin and a device life can be improved.

Moreover, Patent Literature 2 discloses a method in which, when a semiconductor light emitting element having a single wavelength, in comparison with a high pressure mercury lamp or the like, which has a wide wavelength region, is used as a light source for curing a resin, curability of an optical fiber coating is improved, by using a material prepared by containing, into an ultraviolet curable resin composition, a photopolymerization initiator having an absorption region in a wavelength of light emitted from the semiconductor light emitting element.

CITATION LIST

PATENT LITERATURE

Patent Literature 1: JP-A-2010-117531 ("JP-A" means unexamined published Japanese patent application)
Patent Literature 2: JP-A-2011-256331

JP 2010 264603 A discloses a method of manufacturing an optical component. Documents WO2011075549-A1, JPH09156965-A and JP2003089555-A describe also methods of manufacturing optical fibers.

SUMMARY OF INVENTION

TECHNICAL PROBLEM

However, when curing is made with a semiconductor light emitting element by using a resin composition containing a photopolymerization initiator or the like adapted for a wavelength of light emitted from the semiconductor light emitting element, it has been found to be difficult to achieve an elastic modulus (Young's modulus) with the same level, by curing an ultraviolet curable resin to the same level when using a high pressure mercury lamp or the like.

Thus, the present invention is contemplated for overcoming the above-described problems; and providing a method of producing an optical fiber according to which an optical fiber having a coating resin with a high elastic modulus can be obtained by using the semiconductor light emitting element as a light source for curing the resin. Moreover, the present invention is contemplated for providing an apparatus of producing the optical fiber for obtaining such an optical fiber.

SOLUTION TO PROBLEM

That is, the present invention provides the following means:

(1) A method of producing an optical fiber, comprising:

(a) a resin application step of applying an ultraviolet curable resin, onto an outer circumference of an optical fiber;
(b) a heating step of heating the ultraviolet curable resin; and
(c) a light irradiation step of irradiating the ultraviolet curable resin with ultraviolet light emitted from a semiconductor light emitting element, in a state in which the ultraviolet curable resin is heated, to cure the ultraviolet curable resin into a coating resin.
wherein a temperature, at which the ultraviolet curable resin is heated, is equal to or higher than the glass transition temperature of the coating resin; and
wherein the light irradiation step is different from the heating step;
wherein the glass transition temperature is a temperature at a maximal point of tan δ, which is obtained by the following formula:

$$\tan \delta = (\text{loss elastic modulus E''})/(\text{storage elastic modulus E'})$$

wherein the loss elastic modulus E" and the storage elastic modulus E' are obtained by the following method:

first, an ultraviolet curable resin before curing is applied onto a glass plate at a thickness of 0.050 mm by a bar coater, and the resultant assembly is irradiated with ultraviolet light to be 1.0 J/cm$^2$ by a FUSION lamp, whereby the resin is subjected to photopolymerization on the glass plate and cured into a film form; then, this film is cut into a 6 mm-wide strip of films, and viscoelasticity is measured at a heating rate of 5°C/min in the temperature range of -100°C to 150°C, by using a dynamic viscoelasticity measuring instrument RSA3.

(2) The method of producing an optical fiber as described in item (1), wherein ultraviolet light emitted from the semiconductor light emitting element has a single peak wavelength or a plurality of peak wavelengths.
(3) The method of producing an optical fiber as described in item (1) or (2), wherein the ultraviolet curable resin comprises urethane (meth)acrylate, and a photopolymerization initiator having an absorption region in a wavelength region of ultraviolet light emitted from the semiconductor light emitting element.
(4) The method of producing an optical fiber as described in any one of items (1) to (3), wherein a wavelength of ultraviolet light emitted from the semiconductor light emitting element is 300 nm or more.
(5) An apparatus of producing an optical fiber, comprising:

(a1) a resin application means for applying an ultraviolet curable resin, onto an outer circumference of an optical fiber; and
(a2) an ultraviolet irradiation unit comprising:

(b) a heating means comprising heaters (69) for heating the ultraviolet curable resin; and
(c) a light irradiation means comprising one or a plurality of semiconductor light emitting elements (66), wherein the heated ultraviolet curable resin is irradiated with ultraviolet light emitted from the semiconductor light emitting element, to cure the ultraviolet curable resin into a coating resin;

wherein the ultraviolet irradiation unit has an ultraviolet irradiation unit body (61), an intake device (62), an exhaust device (63), and a cylindrical body (65) through which ultraviolet light is transmitted;
wherein the intake device (62) and the exhaust device (63) each are provided with an insertion opening (64) into which an optical fiber (25) coated with an ultraviolet curable resin is inserted;
wherein the heaters (69) are located in an upper end and a lower end of the cylindrical body (65); and
wherein the apparatus of producing an optical fiber has a control unit (70), and a temperature measuring instrument (31) for measuring a temperature inside the cylindrical body (65).
(6) The apparatus of producing an optical fiber as described in item (5), wherein ultraviolet light emitted from the semiconductor light emitting element has a single peak wavelength or a plurality of peak wavelengths.

In addition, the above-described expression "applying an (the) ultraviolet curable resin, onto an (the) outer circumference of an (the) optical fiber" includes both of a case where the ultraviolet curable resin is directly applied onto the outer circumference of an optical fiber bare wire, and a case where the ultraviolet curable resin is further applied onto the outer circumference of the optical fiber onto which the ultraviolet curable resin has been applied.

ADVANTAGEOUS EFFECTS OF INVENTION

According to the method of producing an optical fiber of the present invention, an optical fiber having a coating resin with a high elastic modulus can be obtained by satisfactorily curing an ultraviolet curable resin in a manner similar to a case where the conventional high pressure mercury lamp or the like is used, even when a semiconductor light emitting element is used as a light source for curing the resin.

Other and further features and advantages of the invention will appear more fully from the following description, appropriately referring to the accompanying drawings.

BRIEF DESCRIPTION OF DRAWING

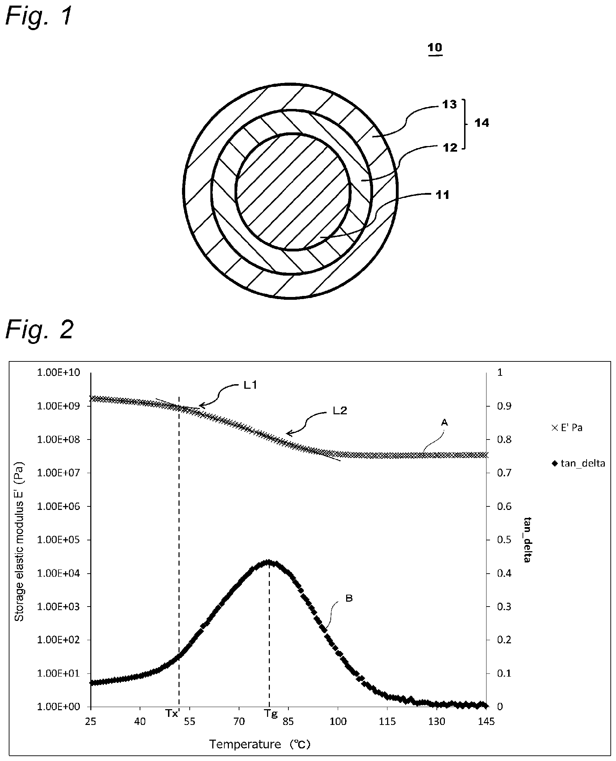

{Fig. 1}
Fig. 1 is a schematic cross-sectional view showing one embodiment of an optical fiber.
{Fig. 2}
Fig. 2 shows graphs each prepared by plotting a relationship between a temperature and a storage modulus E' in a coating resin cured by a high pressure mercury lamp or the like, and a relationship between the temperature and tan $\delta$.
{Fig. 3}
Fig. 3 shows graphs each prepared by plotting a relationship between a temperature and a storage modulus E' in a coating resin cured by a LED lamp, and a relationship between the temperature and tan $\delta$.
{Fig. 4}
Fig. 4 is a schematic configuration diagram showing an apparatus suitable of producing an optical fiber according to a first embodiment of the present invention.
{Fig. 5}
Fig. 5 is a schematic configuration diagram showing an apparatus of coating of a resin.
{Fig. 6}
Fig. 6 is a schematic configuration diagram showing an apparatus suitable of producing an optical fiber according to another embodiment of the first embodiment of the present invention.
{Fig. 7}
Fig. 7 is a schematic configuration diagram showing of another embodiment of the apparatus of coating of a resin.
{Fig. 8}
Fig. 8 is a schematic cross-sectional view of an ultraviolet irradiation unit having a heating means in an apparatus of producing an optical fiber according to a second embodiment of the present invention.
{Fig. 9}
Fig. 9 is a schematic configuration diagram showing an apparatus suitable of producing an optical fiber according to a third embodiment of the present invention.
{Fig. 10}
Fig. 10 is a schematic configuration diagram showing an apparatus suitable of producing an optical fiber according to another embodiment of the third embodiment of the present invention.
{Fig. 11}
Fig. 11 is a schematic configuration diagram showing an apparatus suitable of producing an optical fiber according to another embodiment of the third embodiment of the present invention.
{Fig. 12}
Fig. 12 is a schematic configuration diagram showing an apparatus suitable of producing an optical fiber according to another embodiment of the third embodiment of the present invention.
{Fig. 13}
Fig. 13 is a schematic configuration diagram showing an apparatus of producing an optical fiber according to a fourth embodiment not belonging to the present invention.
{Fig. 14}

Fig. 14 is a schematic configuration diagram showing an apparatus of producing an optical fiber according to another embodiment of the fourth embodiment.

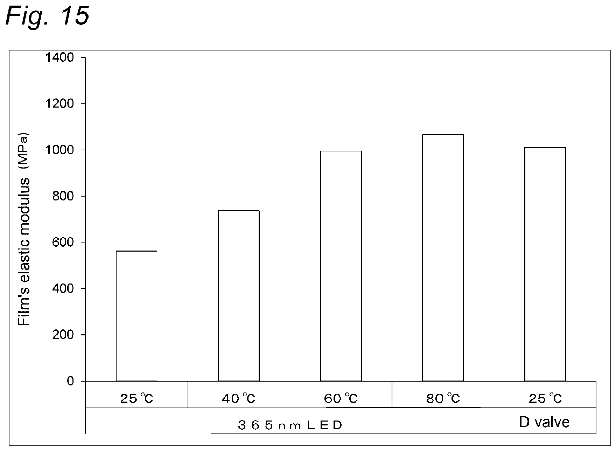

{Fig. 15}

Fig. 15 is a graph showing the results measuring of a relationship between a heating temperature and the elastic modulus of a film formed by curing, using an electrodeless UV lamp or a LED lamp.

## MODE FOR CARRYING OUT THE INVENTION

Preferable embodiments of the method of producing an optical fiber and the apparatus of producing the optical fiber of the present invention are explained in detail, referring to the drawings.

First, explanation is made on an embodiment of an optical fiber produced by the method of producing an optical fiber according to the present invention.

Fig. 1 shows a schematic cross-sectional view of an optical fiber in one embodiment. As shown in Fig. 1, an optical fiber 10 has an optical fiber bare wire 11, and a coating layer 14 including two layers: a primary layer (primary coating layer) 12 being a soft layer coated on an outer circumference of the optical fiber bare wire 11; and a secondary layer (secondary coating layer) 13 being a hard layer. The primary layer 12 and the secondary layer 13 each are composed of a coating resin formed of an ultraviolet curable resin irradiated with ultraviolet light and cured, and has a function of protecting the optical fiber bare wire 11. Moreover, in order to provide the layers with distinguishability, the primary layer 12 or the secondary layer 13 may be colored, or a colored layer may be provided on an outer circumference of the secondary layer 13 in several cases. Furthermore, a plurality of optical fibers may be arranged in parallel, and a tape layer may be provided by coating in batch into an optical fiber tape core wire in several cases. When the colored layer may be provided on the outer circumference of the secondary layer 13, or when the tape layer may be provided in that manner, the optical fiber on which the coating is formed is once wound around a bobbin, and the resin is further coated on the surface thereof, to form the coating resin.

The optical fiber bare wire 11 has: a core positioned in the center, to guide light; and a cladding surrounding the core. Moreover, the optical fiber bare wire 11 is formed of quartz-based glass, for example, and to the core, Ge (germanium), P (phosphorus) or the like may be added in order to increase a refractive index; and to the cladding, B (boron), F (fluorine) or the like may be added in order to decrease the refractive index.

A diameter of the optical fiber bare wire 11 is ordinarily 100 to 150 $\mu$m, and generally 124 to 126 $\mu$m. A thickness of the primary layer 12 is ordinarily 10 to 50 $\mu$m, and a thickness of the secondary layer 13 is ordinarily 10 to 50 $\mu$m. Moreover, a diameter of the optical fiber (an outer diameter of the secondary layer 13) is ordinarily 245 $\mu$m to 255 $\mu$m.

In order to hold characteristics and functions of the optical fiber, the primary layer 12 has a Young's modulus of preferably 0.2 MPa or more and 3 MPa or less, and more preferably 0.3 MPa or more and 2 MPa or less. The secondary layer 13 has a Young's modulus of preferably 500 MPa or more, more preferably 500 MPa or more and 2,000 MPa or less, and further preferably 800 MPa or more and 1,500 MPa or less.

Hereinafter, an ultraviolet curable resin is explained in more detail.

As the ultraviolet curable resin to be used as the coating resin of the optical fiber, use may be made, for example, of: an ultraviolet curable resin having at least two ethylenically unsaturated groups which are polymerized and cured with ultraviolet light; and use may be preferably made of: an oligomer.

The ultraviolet curable resin may contain, in addition to the oligomer, a dilution monomer, a photopolymerization initiator, a photosensitizer, a silane coupling agent, a chain transfer agent, and any of various additives. As the dilution monomer, use may be made of: monofunctional (meth)acrylate or polyfunctional (meth)acrylate. The dilution monomer means a monomer for diluting the ultraviolet curable resin.

Herein, the term "oligomer" means a polymer whose polymerization degree is 2 to 100.

As the oligomer, use may be made of: urethane (meth)acrylate, such as polyether-based urethane (meth)acrylate and polyester-based urethane (meth)acrylate, epoxy (meth)acrylate, or polyester (meth)acrylate. These may be used singly or in combination of two or more kinds thereof.

The polyether-based urethane (meth)acrylate means a compound having a polyether segment, (meth)acrylate, and a urethane bond, such as a reaction product among: a polyol having a polyether skeleton, an organic polyisocyanate compound, and a hydroxyalkyl (meth)acrylate. Moreover, the polyester-based urethane (meth)acrylate means a compound having a polyester segment, a (meth)acrylate, and a urethane bond, such as a reaction product among: a polyol having a polyester skeleton, an organic polyisocyanate compound, and a hydroxyalkyl (meth)acrylate.

In the present invention, the urethane (meth)acrylate is preferable. Flexibility and hardness are readily adjusted by using the urethane (meth)acrylate, and both of moderate flexibility and hardness can be satisfied.

In this specification, the term "(meth)acrylate" includes each of acrylate and methacrylate.

As the monofunctional (meth)acrylate or polyfunctional (meth)acrylate as the dilution monomer, the followings can be exemplified. Specific examples include di(meth)acrylate, such as butanediol di(meth)acrylate, hexanediol di(meth)acrylate, ethoxylated hexanediol di(meth)acrylate, propoxylated hexanediol di(meth)acrylate, diethylene glycol di(meth)acrylate, polyethylene glycol di(meth)acrylate, polypropylene glycol di(meth)acrylate, neopentyl glycol di(meth)acrylate, ethoxylated neopentyl glycol di(meth)acrylate, and hydroxy pivalic acid neopentyl glycol di(meth)acrylate;

the mono(meth)acrylate, such as 2-hydroxyethyl (meth)acrylate, 2-hydroxypropyl (meth)acrylate, 2-hydroxybutyl (meth)acrylate, n-butyl (meth)acrylate, isobutyl (meth)acrylate, t-butyl (meth)acrylate, glycidyl (meth)acrylate, acryloyl morpholine, N-vinylpyrrolidone, tetrahydrofurfuryl acrylate, cyclohexyl (meth)acrylate, 2-ethylhexyl (meth)acrylate, isobornyl (meth)acrylate, isodecyl (meth)acrylate, lauryl (meth)acrylate, tridecyl (meth)acrylate, cetyl (meth)acrylate, stearyl (meth)acrylate, benzyl (meth)acrylate, 2-ethoxyethyl (meth)acrylate, 3-methoxybutyl (meth)acrylate, ethylcarbitol (meth)acrylate, phosphoric acid (meth)acrylate, ethyleneoxide-modified phosphoric acid (meth)acrylate, phenoxy (meth)acrylate, ethyleneoxide-modified phenoxy (meth)acrylate, propyleneoxide-modified phenoxy (meth)acrylate, nonylphenol (meth)acrylate, ethyleneoxide-modified nonylphenol (meth)acrylate, propyleneoxide-modified nonylphenol (meth)acrylate, methoxydiethylene glycol (meth)acrylate, methoxypolythylene glycol (meth)acrylate, methoxypropylene glycol (meth)acrylate, 2-(meth)acryloyloxyethyl-2-hydroxypropyl phthalate, 2-hydroxy-3-phenoxypropyl (meth)acrylate, 2-(meth)acryloyloxyethyl hydrogen phthalate, 2-(meth)acryloyloxypropyl hydrogen phthalate, 2-(meth)acryloyloxypropyl hexahydro hydrogen phthalate, 2-(meth)acryloyloxypropyl tetrahydro hydrogen phthalate, dimethylaminoethyl (meth)acrylate, trifluoroethyl (meth)acrylate, tetrafluoropropyl (meth)acrylate, hexafluoropropyl (meth)acrylate, octafluoropropyl (meth)acrylate, octafluoropropyl (meth)acrylate and adamantyl mono(meth)acrylate;

the tri(meth)acrylate, such as trimethylolpropane tri(meth)acrylate, ethoxylated trimethylolpropane tri(meth)acrylate, propoxylated trimethylolpropane tri(meth)acrylate, tris-2-hydroxyethyl isocyanurate tri(meth)acrylate, and glycerol tri(meth)acrylate; and

the polyfunctional (meth)acrylate being tetrafunctional or more functional (meth)acrylate, such as pentaerythritol tri(meth)acrylate, dipentaerythritol tri(meth)acrylate, ditrimethylolpropane tri(meth)acrylate, pentaerythritol tetra(meth)acrylate, ditrimethylolpropane tetra(meth)acrylate, dipentaerythritol tetra(meth)acrylate, dipentaerythritol penta(meth)acrylate, ditrimethylolpropane penta(meth)acrylate, dipentaerythritol hexa(meth)acrylate, and ditrimethylolpropane hexa(meth)acrylate; and the polyfunctional (meth)acrylate in which part of the above-described (meth)acrylate is replaced by an alkyl group or $\varepsilon$-caprolactone.

The dilution monomer may be used singly or in combination of two or more kinds thereof. In consideration of abrasion resistance of the coating film obtained, an amount of use of the dilution monomer is preferably 100 parts by mass or less, and preferably 10 to 70 parts by mass, based on 100 parts by mass of the oligomer.

A radical photopolymerization initiator adapted for a wavelength region of ultraviolet light emitted from the semiconductor light emitting element may be added thereto. As one example, when the wavelength region of light emitted from a light source of the semiconductor light emitting element is 350 to 405 nm, any of various materials can be used, if such a material is a photopolymerization initiator which has ultraviolet absorption in this wavelength region and may preferably cure the ultraviolet curable resin composition.

Moreover, a radical photopolymerization initiator similar to the initiator when the resin is cured with the conventional high pressure mercury lamp or the like, may be added thereto. In such a case, absorption of ultraviolet light becomes significantly small in the wavelength region of light emitted from the light source of the semiconductor light emitting element. At this time, the ultraviolet curable resin can be sufficiently cured, by heating the ultraviolet curable resin.

Specific examples thereof include, in the form of an $\alpha$-amino ketone-type, 2-methyl-1-[4-(methylthio)phenyl]-2-morpholinopropanone-1,2-benzyl-2-dimethylamino-1-(4-morpholinophenyl)-butane-1-one, 2-(dimethylamino)-2-[(4-methylphenyl)methyl]-1-[4-(4-morpholinyl)phenyl]-1-butanone, and N,N-dimethylaminoacetophenone. Specific examples of commercially available products include Irgacure 907, Irgacure 369, Irgacure 379, and Irgacure 389 (trade names, manufactured by BASF SE). In addition, "Irgacure" is a registered trademark of BASF SE.

Specific examples of commercially available products include, in the form of an $\alpha$-hydroxyalkylphenone-type, Irgacure 184, Irgacure 2959, and Irgacure 127 (trade names, manufactured by BASF SE).

Specific examples thereof include, in the form of an acylphosphine oxide-type, 2,4,6-trimethylbenzoyldiphenylphosphine oxide, bis(2,4,6-trimethylbenzoyl)-phenylphosphine oxide, and bis(2,6-dimethoxybenzoyl)-2,4,4-trimethylpentylphosphine oxide. Specific examples of commercially available products include Irgacure 819, Lucirin TPO, Lucirin TPO-L, Irgacure 2100, Darocur 4265, and Irgacure 2022 (trade names, manufactured by BASF SE).

Specific examples thereof include, in the form of an O-acyloxime-type, 1-[4-(phenylthio)phenyl]-1,2-octanedione-2-(O-benzoyloxime), and ethanone,1-[9-ethyl-6-(2-methylbenzoyl)-9H-carbazole-3-yl]-, 1-(O-acetyloxime). Specific examples of commercially available products include Irgacure OXE01, and Irgacure OXE02 (trade names, manufactured by BASF SE).

In the present invention, any of these photopolymerization Initiators may be used singly or in combination of two or more kinds thereof, and in such a case, a combination of an $\alpha$-hydroxyalkylphenone-type and an acylphosphine oxide-type or an O-acyloxime-type is preferable.

In consideration of coating conditions of the ultraviolet curable resin, physical properties thereof after curing, or the like, an amount of blending the above-described photopolymerization initiator is preferably 0.01 to 30 parts by mass, more preferably 0.01 to 20 parts by mass, and further preferably 0.01 to 10 parts by mass, based on 100 parts by mass of the ultraviolet curable resin to be applied.

In order to provide the layer with adhesion onto a glass optical fiber, the silane coupling agent is mainly added to the primary layer. Specific examples of the silane coupling agents include mercaptopropyltrimethoxysilane, methacryloxytrimethoxysilane, methacryloxypropyltrimethoxysilane, and aminopropyltriethoxysilane. Moreover, these silane coupling agents may be used in combination therewith.

Moreover, the photosensitizer may be used in combination with the radical photopolymerization initiator to be used with the conventional high pressure mercury lamp. Photosensitivity can be imparted to the layer, by combining the photosensitizer with the photopolymerization initiator, in the wavelength region in which the photopolymerization initiator has no absorption. Specific examples of the photosensitizers which may react to the light source of the semiconductor light emitting element in 350 nm to 405 nm include, among thioxanthone-based compounds, thioxanthone, 2,4-diethylthioxanthone, 2-methylthioxanthone, 2,4-dimethylthioxanthone, isopropylthioxanthone, 2,4-diisopropylthioxanthone, 2-chlorothioxanthone, 2,4-dichlorothioxanthone, and 1-chloro-4-propoxythioxanthone. Moreover, specific examples thereof include, among amine-based compounds, 4,4'-dimethylaminobenzophenone, and 4,4'-diethylaminobenzophenone.

An amount of blending the photosensitizer is preferably in a proportion of 0.01 to 20 parts by mass, and more preferably 0.1 to 10 parts by mass, based on 100 parts by mass of the ultraviolet curable resin. A sufficient sensitization effect and photocurability can be obtained, by adjusting the proportion to 0.01 to 20 parts by mass.

In order to improve sensitivity, any of N-phenylglycines, phenoxyacetic acids, thiophenoxyacetic acids, mercaptothiazole or the like can be used as the chain transfer agent. Specific examples of the chain transfer agents include mercaptosuccinic acid, mercaptoacetic acid, mercaptopropionic acid, methionine, cysteine, thiosalicylic acid, and a derivative thereof. These chain transfer agents may be used singly or in combination of two or more kinds thereof.

An amount of addition of the chain transfer agent is preferably in the range of 0.01 to 10 mass%, from a viewpoint of reducing sensitivity fluctuations, more preferably 0.1 to 10 mass%, and particularly preferably 0.5 to 5 mass%, based on total solids including the ultraviolet curable resin.

The ultraviolet curable resin may contain, when necessary, a leveling agent, a defoaming agent, and any of various additives for the purpose of antisagging or the like. Moreover, as a coloring agent, a pigment, a dye, a coloring matter or the like is preferably used.

A method of producing the optical fiber according to the present invention has: (a) a resin application step of applying the ultraviolet curable resin, onto the outer circumference of the optical fiber; (b) a heating step of heating the ultraviolet curable resin; and (c) a light irradiation step of irradiating the ultraviolet curable resin with ultraviolet light emitted from the semiconductor light emitting element, in a state in which the ultraviolet curable resin is heated, to cure the ultraviolet curable resin into the coating resin.

In the heating step (b), the ultraviolet curable resin only needs to be heated in ultraviolet irradiation, and the heating step (b) is provided in the resin application step (a) of applying the ultraviolet curable resin or the light irradiation step (c). For example, the resin application step (a), the heating step (b), and the light irradiation step (c) may be provided in this order. Moreover, all or part of the resin application step (a), the heating step (b), and the light irradiation step (c) may be repeated. Moreover, the resin application step (a) and the heating step (b) may be simultaneously performed. Furthermore, the heating step (b) and the light irradiation step (c) may be simultaneously performed.

When the resin application step (a) and the heating step (b) are simultaneously performed, for example, a die, from which the resin is output, is heated by a heater or the like provided around the die.

When the heating step (b) and the light irradiation step (c) are simultaneously performed, for example, an inside of a cylindrical body, which is provided in the light irradiation means, and through which the optical fiber after the optical fiber is coated with the ultraviolet curable resin, is heated by the heater or the like.

As the heater or the like, a well-known heater can be used, such as a tape heater, a ribbon heater, a rubber heater, an oven heater, a ceramic heater, an infrared irradiation unit, an ultraviolet irradiation unit, a heating wire heater, a carbon heater, and a halogen heater.

Next, the heating temperature in the heating step (b) is explained in more detail.

When the ultraviolet curable resin is cured by using the conventional high pressure mercury lamp or the like, the coating resin having a desired elastic modulus can be obtained by performing ultraviolet irradiation in a required quantity. However, it has been found that, when the semiconductor light emitting element is used in place of the high pressure mercury lamp or the like, the desired elastic modulus cannot be obtained even by performing ultraviolet irradiation in the required quantity. In this regard, improvement is seen by adding, to the ultraviolet curable resin, the radical photopolymerization initiator adapted for the wavelength region of ultraviolet light emitted from the semiconductor light emitting element. However, even if such a photopolymerization initiator is used, Young's modulus cannot be sufficiently improved to a level same with the level when using the high pressure mercury lamp or the like.

When the inventors of the present invention have continued to conduct studies on that cause in various manners, the inventors obtained the following findings, and completed the present invention. That is, upon curing the ultraviolet curable resin by using the high pressure mercury lamp or the like, the ultraviolet curable resin is heated by radiant heat or the like to 130°C or higher, which is higher than a glass transition temperature (Tg). On the other hand, upon using the semiconductor light emitting element in place of the high pressure mercury lamp or the like, the ultraviolet curable resin is hardly heated only to a degree of 30°C to 50°C, which is assumed to have an influence on the results in which no desired elastic modulus is obtained.

In the present invention, upon performing ultraviolet irradiation by the semiconductor light emitting element, action of accelerating curing of the ultraviolet curable resin is utilized by heating the ultraviolet curable resin. Thus, even if the semiconductor light emitting element is used as the light source for curing the resin, it has been enabled to obtain an objective optical fiber having the coating resin with a sufficiently high elastic modulus.

A heating temperature of the ultraviolet curable resin herein is equal to or higher than the glass transition temperature Tg. An upper limit of the heating temperature is not particularly limited, but realistically from the viewpoints of consumption energy saving and prevention of volatilization of a low-molecular-weight component in the ultraviolet curable resin, the upper limit is preferably equal to or lower than a temperature higher by 40°C than the glass transition temperature (Tg).

Herein, a way of determining the temperature Tx is described with reference to Fig. 2. Fig. 2 shows graphs A and B each obtained by plotting a relationship between a temperature and a storage modulus E' and between the temperature and tan delta (loss tangent, hereinafter described as tan $\delta$) in a coating resin. The storage modulus E' is shown in a graph in a left longitudinal axis, and tan $\delta$ is shown in a right longitudinal axis.

Fig. 2 can be obtained as described below. First, an ultraviolet curable resin before curing is applied onto a glass plate at a thickness of 0.050 mm by a bar coater, and the resultant assembly is irradiated with ultraviolet light to be 1.0 J/cm$^2$ by a FUSION lamp (D valve). The resin is subjected to photopolymerization on the glass plate and cured into a film form. At this time, the ultraviolet curable resin is formed into a state in which a curing reaction is substantially completely progressed. This film is cut into a 6 mm-wide strip of films, and viscoelasticity is measured at a heating rate of 5°C/min in the temperature range of -100°C to 150°C, by using a dynamic viscoelasticity measuring instrument RSA3 (manufactured by TA Instruments, Inc.).

tan $\delta$ is obtained from the storage elastic modulus E' and loss elastic modulus E" obtained by the measurements. tan $\delta$ is obtained by the following formula.

$$\tan \delta = (\text{loss elastic modulus E"})/(\text{storage elastic modulus E'})$$

Next, a temperature at a maximal point of tan $\delta$ is read from the measurement results. This value corresponds to the glass transition temperature (Tg) of the ultraviolet curable resin, and is the glass transition temperature (Tg) in the present invention.

Moreover, in a storage modulus E' curve (A) obtained from the measurement results, such a temperature is taken as Tx, the temperature corresponding to a point of intersection, in a region of temperature equal to or lower than the glass transition temperature (Tg), between a tangent line (L1) in which an absolute value of an inclination relative to the curve is minimized, and a tangent line (L2) in which the absolute value of the inclination relative to the curve is maximized.

In addition, a reason why the ultraviolet curable resin is heated to a level equal to or higher than the glass transition temperature Tg, is considered as described below.

In the ultraviolet curable resin, polymerization progresses by ultraviolet irradiation. The resin has a low glass transition temperature Tg' in a liquid state, and accordingly as the polymerization progresses by ultraviolet irradiation, a network structure of molecular chains is formed in the resin, and an elastic modulus is increased. When curing is finally completed, the glass transition temperature reaches Tg higher than Tg'. After completion of the reaction, a rise of the glass transition temperature stops.

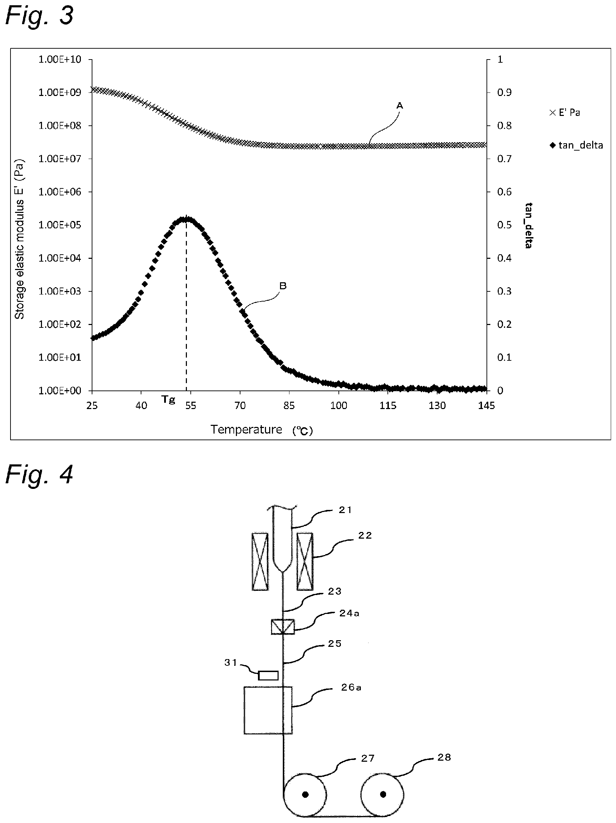

Fig. 3 shows graphs each obtained by plotting a relationship between a temperature and a storage modulus E' and between the temperature and tan $\delta$ in a coating resin cured by using a light source of a semiconductor light emitting element. An ultraviolet curable resin before curing is applied onto a glass plate at a thickness of 0.050 mm by a bar coater, and the resultant assembly is irradiated with ultraviolet light to be 1.0 J/cm$^2$ by an LED lamp (wavelength 365 nm). The resin is subjected to photopolymerization on the glass plate and cured into a film form. This film is cut into a 6 mm-wide strip of films, and viscoelasticity is measured at a heating rate of 5°C/min in the temperature range of 25°C to 150°C, by using a dynamic viscoelasticity measuring instrument RSA3 (manufactured by TA Instruments, Inc.). In Fig. 3, A and B each are a curve showing a relationship between the temperature and the storage modulus E' and between the temperature and tan $\delta$.

As known in comparison with Fig. 2, a glass transition temperature $Tg_{LED}$ of the coating resin cured by the light source of the semiconductor light emitting element is lower than the glass transition temperature Tg of the coating resin cured by the high pressure mercury lamp or the like. Such a phenomenon is resulted from a lower degree of progress of a crosslinking reaction in the coating resin, and partial incompletion of the curing reaction of the ultraviolet curable resin when the resin is cured by the light source of the semiconductor light emitting element, in comparison with the case where the resin is cured by the conventional high pressure mercury lamp or the like.

Thus, curability at the level same with the level when using the conventional high pressure mercury lamp or the like, cannot be obtained in curing by the light source of the semiconductor light emitting element only.

Herein, if the temperature reaches the level equal to or higher than the glass transition temperature, the network structure of molecular chains in the resin is loosened and progress of the crosslinking reaction is facilitated. Thus, the resin is heated to a level equal to or higher than $Tg_{LED}$ being the temperature between Tg' and Tg to be passed therethrough in polymerization, and preferably to a level equal to or higher than Tg. Thus, the network structure is loosened in the reaction and progress of the crosslinking reaction is facilitated. As a result, a resin cured product having a sufficiently high elastic modulus is obtained, in comparison with the case where the resin is cured by using the light source of the semiconductor light emitting element without such a heating.

In addition, the glass transition temperature $Tg_{LED}$ of the coating resin cured by the light source of the semiconductor light emitting element is near Tx of the coating resin cured by the high pressure mercury lamp or the like, and thus Tx can be substituted for $Tg_{LED}$, and the resin is preferably heated to a level equal to or higher than Tx, and more preferably to a level equal to or higher than Tg.

In addition, in a resin having a higher elastic modulus, the network structure by a polymerization reaction is more rigid, Tg is higher, and an effect of heating is larger.

With the method of producing the optical fiber and the apparatus of producing the same according to the present invention, curing of the ultraviolet curable resin can be accelerated by supplementing a required heat by heating the ultraviolet curable resin. Further, even when the semiconductor light emitting element is used as the light source for curing the resin, it can be obtained for the optical fiber having the coating resin with the high elastic modulus.

Herein, an issue in which a desired elastic modulus cannot be obtained, is conspicuous in the case, for example, of the coating resin in which the desired elastic modulus is as high as 500 MPa. The coating resin, in which such a high elastic modulus is required, is, generally, in the secondary layer of the optical fiber, the colored layer provided on the outer circumference of the secondary layer, or the tape layer prepared by arranging a plurality of optical fibers in parallel and being coated in batch.

Young's modulus of the coating resin is adjusted by a chain length (molecular weight) of a polyether moiety or polyester moiety, or a kind or amount of addition of the dilution monomer, for example, in polyether-based urethane (meth)acrylate or polyester-based urethane (meth)acrylate. Specific examples of decreasing the Young's modulus include by: increasing the chain length of the polyether moiety or the polyester moiety; and adding a monomer having a linear soft segment. On the other hand, when the Young's modulus is increased, the Young's modulus can be increased by: decreasing the chain length of the polyester moiety or the polyether moiety; increasing a urethane group concentration; or selecting a monomer or a polyfunctional monomer, each having a rigid molecular structure, such as an aromatic ring.

(First embodiment)

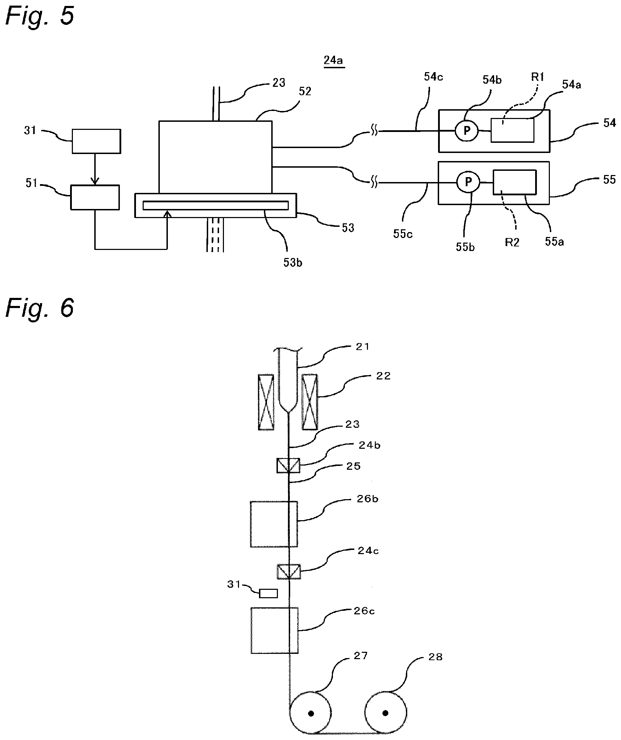

The method of producing an optical fiber according to a first embodiment of the present invention is explained in detail, referring to the drawings. Figs. 4 and 6 show schematic configuration diagrams of an apparatus suitable of producing an optical fiber according to the method of a first embodiment of the present invention.

The apparatus of producing the optical fiber according to this embodiment, shown in Fig. 4, is an apparatus according to a Wet-on-Wet system in which a plurality of coating layers are simultaneously coated, in which an example of simultaneously forming a primary layer and a secondary layer is shown. As shown in Fig. 4, the apparatus of producing the optical fiber has: a heater 22 as a drawing means for drawing an optical fiber bare wire 23 off by melting and stretching an optical fiber preform 21; a resin application device 24a as a resin application means arranged below the heater 22 to apply an ultraviolet curable resin onto an outer circumference of the optical fiber bare wire 23; an ultraviolet irradiation unit 26a as a light irradiation means having a semiconductor light emitting element to irradiate the ultraviolet curable resin with ultraviolet light emitted from the semiconductor light emitting element, to cure the ultraviolet curable resin into a cured resin; a temperature measuring instrument 31 arranged right above the ultraviolet irradiation unit 26a to measure a temperature of the ultraviolet curable resin; a winding device 28 for winding an optical fiber 25 in which the resin is coated on the optical fiber bare wire 23; and a guide roller 27 for guiding the optical fiber 25 to the winding device 28. Moreover, the resin application device 24a has a heating means for heating the ultraviolet curable resin.

The ultraviolet irradiation unit 26a is formed in which, for example, one or a plurality of semiconductor light emitting elements each having a peak wavelength from 300 nm to 405 nm is/are arranged. Moreover, the unit 26a may be formed into one light irradiation means having a plurality of peak wavelengths by combining the plurality of semiconductor light emitting elements each having the peak wavelength from 300 nm to 405 nm. Moreover, a plurality of semiconductor light emitting elements each having the same peak wavelength may be arranged within an identical light irradiation means, and a plurality of the light irradiation means may be arranged. Irradiation energy is preferably 10 to

3,000 mJ/cm$^2$, and more preferably 30 to 1,500 mJ/cm$^2$. The semiconductor light emitting element is electrically connected to a controller (not shown), and output thereof is controlled. For example, a semiconductor laser, a light emitting diode or the like can be used as the semiconductor light emitting element.

As the temperature measuring instrument 31, for example, a thermoviewer can be used. A surface temperature of a substance is measured by the thermoviewer, but the coating of the optical fiber is sufficiently thin, as mentioned above, and thus the surface temperature is regarded as the temperature of the ultraviolet curable resin without any problems.

Moreover, the optical fiber is running at a high speed, for example, 500 m/min or more in production, and thus a temperature immediately before being inserted into the ultraviolet irradiation unit is regarded to be the same with the heating temperature in light irradiation in the ultraviolet light irradiation unit without any problems.

The optical fiber preform 21 is composed, for example, of quartz-based glass, and is produced by a well-known method, such as a VAD method, an OVD method, and a CVD method. An end of the optical fiber preform 21 is heated by the heater 22 arranged around the optical fiber preform 21, melted and drawn, and the optical fiber bare wire 23 is drawn off. On the thus-drawn-off optical fiber bare wire 23, the primary layer and the secondary layer are coated in batch by the resin application device 24a positioned in a lower part. At this time, the ultraviolet curable resin is applied onto the outer circumference of the optical fiber bare wire 23, and simultaneously heated by heating the ultraviolet curable resin by the heating means equipped in the resin coating device 24a. The ultraviolet curable resin immediately enters the ultraviolet irradiation unit 26a in a heated state, and the ultraviolet curable resin is cured by ultraviolet light emitted from the semiconductor light emitting element. Thus, the primary layer and the secondary layer, each being the coating resin, are formed.

A configuration of the resin coating device 24a and a coating method are specifically described herein. Fig. 5 is a schematic configuration diagram showing the resin coating device 24a. As shown in Fig. 5, this resin coating device 24a has: a die unit 52; a die holder 53 for holding the die unit 52 from below; resin suppliers 54 and 55 for supplying a resin to the die unit 52; and a control unit 51.

The die unit 52 has an optical fiber introduction unit (not shown) for introducing an optical fiber bare wire 23; and the die holder 53 has an opening (not shown) being a circular hole coaxially connected with the optical fiber introduction unit, and a heater 53b as a heating means. The resin suppliers 54 and 55 have: resin tanks 54a and 55a for storing a resin R1 being an ultraviolet curable resin for a primary layer and a resin R2 being an ultraviolet curable resin for a secondary layer; pumps 54b and 55b for delivering the resins R1 and R2 stored in the resin tanks 54a and 55a; and supply pipes 54c and 55c for supplying, to the die unit 52, the resins R1 and R2 delivered by the pumps 54b and 55b. The control unit 51 receives information on a temperature of the ultraviolet curable resin, the temperature being measured by the temperature measuring instrument 31, to control the heater 53b of the die holder 53 based thereon.

In the resin coating device 24a, the resin R1 for forming the primary layer on the optical fiber bare wire 23, and the resin R2 for forming the secondary layer thereon are applied as described below. First, the pumps 54b and 55b of the resin suppliers 54 and 55 deliver the resins R1 and R2 stored in the resin tanks 54a and 55a, and supply the resins R1 and R2 to the die unit 52 through the supply pipes 54c and 55c.

On the other hand, the optical fiber bare wire 23 is introduced from the optical fiber introduction unit of the die unit 52, and delivered from the opening of the die holder 53. As a result, the resins R1 and R2 are coated on the outer circumference of the optical fiber bare wire 23.

The control unit 51 herein receives the information on the temperature of the ultraviolet curable resin from the temperature measuring instrument 31, to control output of the heater 53b of the die holder 53, in such a manner that the resin R2 for the secondary layer, to be coated on the optical fiber bare wire 23, reaches a level equal to or higher than the temperature Tx as mentioned above, for example. Then, the control unit 51 controls the heater 53b to be a desired temperature in the temperature of the ultraviolet curable resin.

In this embodiment, the control unit 51 controls the heater 53b as described above. Thus, the resin R2 can be heated to the desired temperature. As a result, even when the semiconductor light emitting element is used as a light source for curing the resin, the ultraviolet curable resin is satisfactorily cured, and the optical fiber having the coating resin with the high elastic modulus can be obtained.

In addition, in this embodiment, the description is made on the method in which the information on the temperature of the ultraviolet curable resin is received from the temperature measuring instrument 31, to control the heater 53b of the die holder 53 based thereon. However, such a method may be applied: to a method in which the temperature of the ultraviolet curable resin is not measured in production, and past production data is stored, to control the temperature of the heater 53b based thereon; or to a method in which the heater 53b is kept at a predetermined temperature in which the temperature of the ultraviolet curable resin does not fall below the desired temperature in production. Moreover, the resin tanks 54a and 55a are more preferably heated, to preliminarily bring the temperature of the resins R1 and R2 to be supplied to the die unit 52 closer to the desired temperature.

Next, another method of producing an optical fiber according to the first embodiment of the present invention is explained, referring to Fig. 6.

A production apparatus according to this embodiment shown in Fig. 6 is an apparatus according to a Wet-on-Dry system in which a coating layer is coated by one layer at a time, in which an example of separately coating resins for a primary layer and a secondary layer thereon is shown. Elements different from the elements of the production apparatus shown in Fig. 4 are described, and the same sign is fixed on the same element, and the description thereof is omitted.

As shown in Fig. 6, the production apparatus suitable for this embodiment is similar to the production apparatus described for the first embodiment, except that resin application devices and ultraviolet irradiation units of the primary layer and the secondary layer are separately provided, respectively. The production apparatus suitable for this embodiment has: a resin application device 24b for the primary layer; an ultraviolet irradiation unit 26b for the primary layer; a resin application device 24c for the secondary layer; and an ultraviolet irradiation unit 26c for the secondary layer. The ultraviolet irradiation unit 26c for the secondary layer has one or a plurality of semiconductor light emitting elements, to irradiate an ultraviolet curable resin with ultraviolet light emitted from the semiconductor light emitting elements, to cure the ultraviolet curable resin. A temperature measuring instrument 31 for measuring a temperature of the ultraviolet curable resin is arranged right above the ultraviolet irradiation unit 26c for the secondary layer.

In the followings, the method of producing an optical fiber of this embodiment is specifically explained.

Specifically, an end of an optical fiber preform 21 containing quartz glass as a main component is heated by a heater 22 arranged around the optical fiber preform 21, melted and drawn, and an optical fiber bare wire 23 is drawn off. On the thus-drawn-off optical fiber bare wire 23, the primary layer is coated by the resin application device 24b for the primary layer, and irradiated with ultraviolet light by the ultraviolet irradiation unit 26b for the primary layer. Then, the ultraviolet curable resin for the secondary layer is coated by the resin application device 24c for the secondary layer, and the resin of the secondary layer is cured by the ultraviolet irradiation unit 26c for the secondary layer. At this time, the ultraviolet curable resin is applied, by heating the resin application device 24c for the secondary layer, onto an outer circumference of an optical fiber 25 coated with the primary layer, and simultaneously heated. The optical fiber 25 coated with the secondary layer is immediately inserted into the ultraviolet irradiation unit 26c in a heated state, and the ultraviolet curable resin is cured by ultraviolet light emitted from the semiconductor light emitting element of the ultraviolet irradiation unit 26c. Thus, the secondary layer is coated.

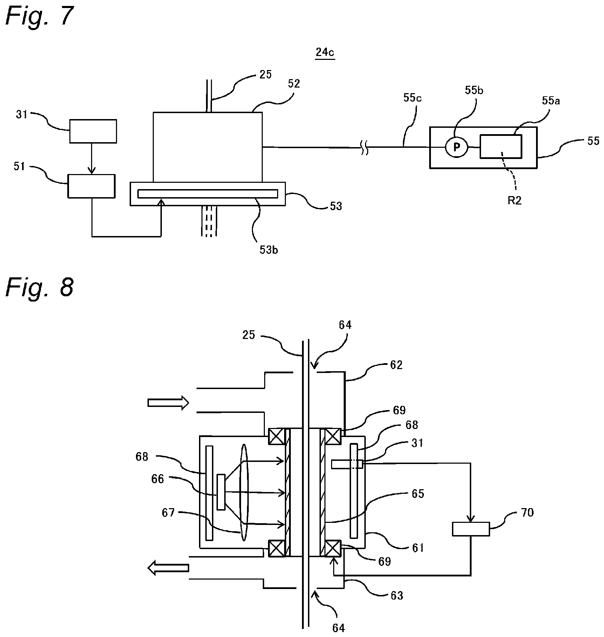

A configuration of the resin application device 24c for the secondary layer and a coating method are specifically described herein. Fig. 7 is a schematic configuration diagram showing the resin application device 24c for the secondary layer shown in Fig. 6. As shown in Fig. 7, this resin application device 24c for the secondary layer has: a die unit 52; a die holder 53 for holding the die unit 52 from below; a resin supplier 55 for supplying a resin to the die unit 52; and a control unit 51.

In comparison with the resin supplier 24a in Fig. 5, the resin application device 24c is different in the point in which the device 24c has only one resin supplier 55 and only one resin supply pipe 55c, respectively, and a configuration other than the above are the same with the configuration of the resin supplier 24a in Fig. 5.

In the resin application device 24c for the secondary layer, a resin R2 is applied onto the optical fiber 25 having coated with the primary layer as described below. First, as shown in Fig. 7, a pump 55b of the resin supplier 55 delivers the resin R2 stored in a resin tank 55a, to supply the resin R2 to the die unit 52 through the supply pipe 55c.

On the other hand, the optical fiber 25 having coated with the primary layer is introduced from an optical fiber introduction unit of the die unit 52, and delivered from an opening of the die holder 53. As a result, the resin R2 is coated on the outer circumference of the optical fiber 25 having coated with the primary layer.

The control unit 51 herein receives information on the temperature of the ultraviolet curable resin from the temperature measuring instrument 31, to control output of a heater 53b of the die holder 53, in such a manner that the resin R2 to be coated on the optical fiber 25 having coated with the primary layer reaches a level equal to or higher than the temperature Tx, as mentioned above, for example. Then, the control unit 51 controls the heater 53b so as to be desired temperature in the temperature of the ultraviolet curable resin.

In this embodiment, the control unit 51 controls the heater 53b as described above. Thus, the resin R2 can be coated on the optical fiber 25 having coated with the primary layer at the desired temperature. As a result, even when the semiconductor light emitting element is used as the light source for curing the resin, the ultraviolet curable resin is satisfactorily cured, and the optical fiber having the coating resin with the high elastic modulus can be obtained.

In addition, in this embodiment, the description is made on the method in which the information on the temperature of the ultraviolet curable resin is received from the temperature measuring instrument 31, to control the heater 53b of the die holder 53 based thereon. However, such a method may be applied: to a method in which the temperature of the ultraviolet curable resin is not measured in production, and past production data is stored, to control the temperature of the heater 53b based thereon; or to a method in which the heater 53b is kept at a predetermined temperature in which the temperature of the ultraviolet curable resin does not fall below the desired temperature in production. Moreover, the resin tank 55a is more preferably heated, to preliminarily bring the temperature of the resin R2 to be supplied to the die unit 52 closer to the desired temperature.

The first embodiment has an aspect in which the ultraviolet curable resin is applied and simultaneously heated, in the resin application device. Further, a tape heater, a ribbon heater or the like can be used as the heater 53b, to have an advantage of capability of readily heating the resin. Moreover, a temperature of the resin application device is adjusted in several cases, in order to suppress resin overflow or mixing of air bubbles from the resin application device, and in such a case, this embodiment can be realized only by changing temperature setting, without large modification of equipment.

(Second embodiment)

Next, the method of producing an optical fiber according to a second embodiment of the present invention is explained in detail, referring to the drawings. In the first embodiment, the method is applied in which the ultraviolet curable resin is heated by heating the die of the resin application device, but this embodiment refers to a method in which an ultraviolet curable resin is heated in an ultraviolet irradiation unit. Fig. 8 is a schematic cross-sectional view of an embodiment of the ultraviolet irradiation unit having a heating means.

As shown in Fig. 8, the ultraviolet irradiation unit according to this embodiment has an ultraviolet irradiation unit body 61, an intake device 62, an exhaust device 63, and a cylindrical body 65 through which ultraviolet light is transmitted. The intake device 62 and the exhaust device 63 each are provided with an insertion opening 64 into which an optical fiber 25 coated with the ultraviolet curable resin is inserted. The unit has, inside the ultraviolet irradiation unit body 61, a semiconductor light emitting element 66, a light collection optical system 67, and mirrors 68 arranged on both sides of the cylindrical body or therearound, in which ultraviolet light from the semiconductor light emitting element 66 is collected by the light collection optical system 67, scattered ultraviolet light is reflected by the mirrors 68, and ultraviolet light is efficiently irradiated on the optical fiber 25.

Moreover, the unit has heaters 69 in an upper end and a lower end of the cylindrical body 65.

Further, the apparatus of producing the optical fiber according to this embodiment has a control unit 70, and a temperature measuring instrument 31 for measuring a temperature inside the cylindrical body 65, in which the control unit 70 receives information on a temperature measured by the temperature measuring instrument 31, to control the heater 69 based thereon.

The control unit 70, herein, receives the information on the temperature measuring instrument 31, to control output of the heater 69, so as to be equal to or higher than the temperature Tx, as mentioned above, inside the cylindrical body 65, for example. Then, the control unit 70 controls the heater 69 so as to satisfy a desired temperature inside the cylindrical body 65. Thus, the ultraviolet curable resin is irradiated with ultraviolet light, and simultaneously heated.

In addition, as mentioned above, the coating of the optical fiber is sufficiently thin, and thus the temperature inside the cylindrical body 65 is regarded as the temperature of the ultraviolet curable resin without any problems.

In addition, in this embodiment, the description is made on the method in which the information on the temperature of the ultraviolet curable resin is received from the temperature measuring instrument 31, to control the heater 69 based thereon. However, such a method may be applied: to a method in which the temperature of the ultraviolet curable resin is not measured in production, and past production data is stored, to control the temperature of the heater 69 based thereon; or to a method in which the heater 69 is kept at a predetermined temperature in which the temperature of the ultraviolet curable resin does not fall below the desired temperature in production.

This embodiment can be applied to both of a Wet-on-Wet system and a Wet-on-Dry system. When this embodiment is applied to the Wet-on-Dry system, if this embodiment is applied to the ultraviolet irradiation unit for forming a coating having Young's modulus of 500 MPa or more in a light irradiation step for the secondary layer, for example, such an application is effective.

The production method according to this embodiment has an aspect in which a heating step for the ultraviolet curable resin and the light irradiation step are simultaneously provided, and the ultraviolet curable resin is heated, and simultaneously irradiated with ultraviolet light.

In this embodiment, each of the production method and the production apparatus has an advantage of capability of readily heating the resin by a tape heater, a ribbon heater or the like as the heater 69. Moreover, by providing the heating means inside the ultraviolet irradiation unit, heating and irradiation can be simultaneously performed without lowering the temperature of the heated resin.

(Third embodiment)

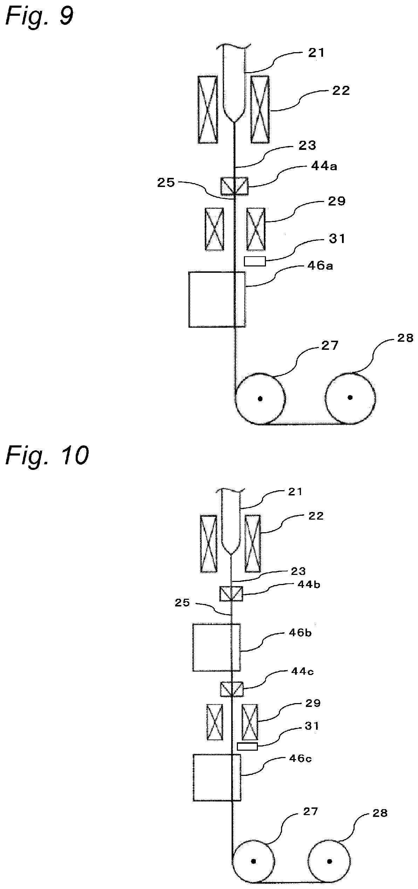

Next, the method of producing an optical fiber according to a third embodiment of the present invention is explained in detail, referring to the drawings. Figs. 9 and 10 show schematic configuration diagrams of an apparatus suitable of producing an optical fiber according to the third embodiment of the present invention. This embodiment refers to a method in which the ultraviolet curable resin is heated by providing, in an upper part of the ultraviolet irradiation unit, the heating means for heating the ultraviolet curable resin. Fig. 9 and Fig. 10 each show a schematic configuration diagram in one embodiment of the ultraviolet irradiation unit equipped with the heating means.

Fig. 9 shows a case where this embodiment is applied to a Wet-on-Wet system, and Fig. 10 shows a case where this embodiment is applied to a Wet-on-Dry system, in which elements different from the elements according to the first embodiment or the second embodiment are described, respectively, and the same sign is fixed on the same element, and the description thereof is omitted.

As shown in Fig. 9, the apparatus suitable of producing the optical fiber according to this embodiment has, between a resin application device 44a as a resin application means for applying the ultraviolet curable resin, and an ultraviolet irradiation unit 46a as a light irradiation means, a heating unit 29 as a heating means for heating the ultraviolet curable resin coated on the optical fiber.

Further, the apparatus suitable of producing the optical fiber according to this embodiment has a control unit (not shown), and a temperature measuring instrument 31, which is installed right above the ultraviolet irradiation unit 46a and which measures a temperature of the ultraviolet curable resin applied thereon, in which the control unit receives information on the temperature measured by the temperature measuring instrument 31, to control the heating unit 29 based thereon.

The control unit, herein, receives the information from the temperature measuring instrument 31, to control output from the heating unit 29, so as to be equal to or higher than the temperature Tx, as mentioned above, in the temperature of the ultraviolet curable resin, for example. Then, the control unit controls the heating unit 29, so as to satisfy a desired temperature in the temperature of the ultraviolet curable resin. Thus, the ultraviolet curable resin is heated.

In addition, in this embodiment, the description is made on the method in which the information on the temperature of the ultraviolet curable resin is received from the temperature measuring instrument 31, to control the heating unit 29 based thereon. However, such a method may be applied: to a method in which the temperature of the ultraviolet curable resin is not measured in production, and past production data is stored, to control the temperature of the heating unit 29 based thereon; or to a method in which the heating unit 29 is kept at a predetermined temperature in which the temperature of the ultraviolet curable resin does not fall below the desired temperature in production.

This embodiment can be applied to both of a Wet-on-Wet system and a Wet-on-Dry system. An apparatus of producing an optical fiber according to a Wet-on-Dry system, as shown in Fig. 10, has a resin application device 44b for the primary layer, an ultraviolet irradiation unit 46b for the primary layer, a resin application device 44c for the secondary layer, and an ultraviolet irradiation unit 46c for the secondary layer. When this embodiment is applied to the Wet-on-Dry system, if a heating unit 29 for forming a coating having Young's modulus of 500 MPa or more is provided, in an upper part of the ultraviolet irradiation unit 46c in the light irradiation step for the secondary layer, for example, such a provision is effective.

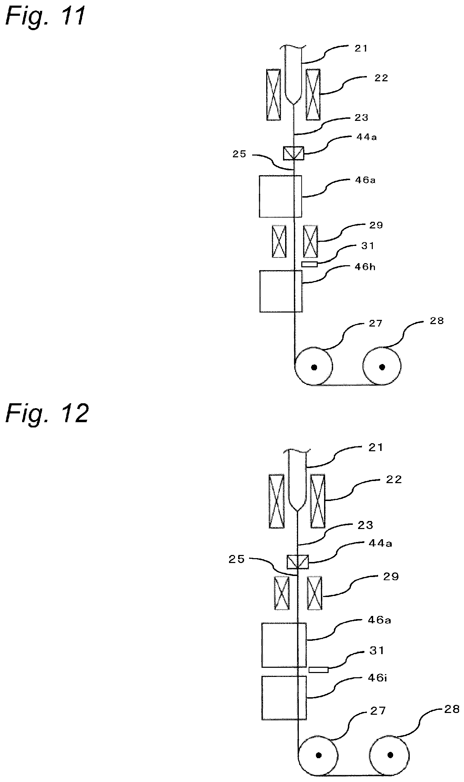

Moreover, as shown in Fig. 11, a plurality of ultraviolet irradiation units each having the semiconductor light emitting element may be provided, and the heating unit 29 arranged between ultraviolet irradiation units 46a and 46h may be provided. Further, as shown in Fig. 12, the heating unit 29 may be provided above ultraviolet irradiation units 46a and 46i.

As the heating unit 29, use may be made of: a known heating means, such as an oven, a ceramic heater, an infrared irradiation unit, a heating wire heater, a carbon heater, and a halogen heater, and any kind thereof may be used, if the resin can be heated.

As in this embodiment, the ultraviolet curable resin can be heated immediately before the resin enters the light irradiation unit, by providing the heating unit 29 right above the ultraviolet irradiation unit 46a, and ultraviolet irradiation can be performed without lowering the temperature of the ultraviolet curable resin.

(Fourth embodiment)

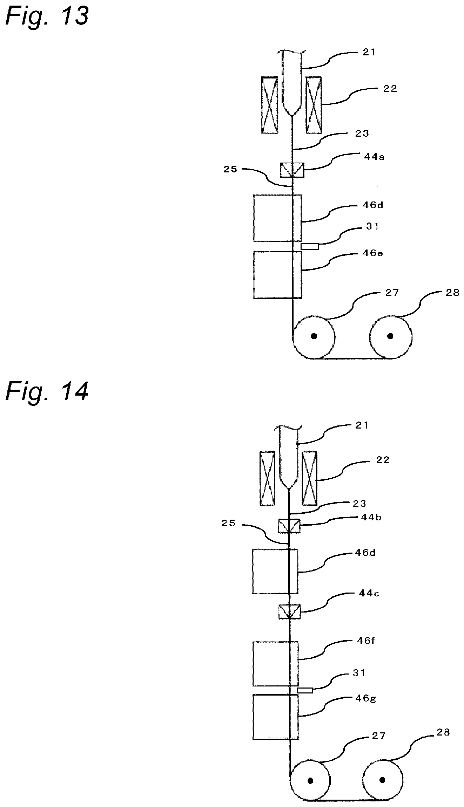

Next, a method of producing an optical fiber according to a fourth embodiment not belonging to the present invention is explained in detail, referring to the drawings. Figs. 13 and 14 show schematic configuration diagrams of an apparatus of producing an optical fiber according to the fourth embodiment. This embodiment refers to a method in which the ultraviolet curable resin is heated, while the ultraviolet curable resin is cured into a coating resin by using an ultraviolet irradiation unit 46d: by providing, in an upper part of the ultraviolet irradiation unit, as a light source, a high pressure mercury lamp or a metal halide lamp as a heating means, to heat the ultraviolet curable resin.

Fig. 13 shows a case where this embodiment is applied to a Wet-on-Wet system, and Fig. 14 shows a case where this embodiment is applied to a Wet-on-Dry system, in which elements different from the elements according to the first embodiment or the second embodiment are described, respectively, and the same sign is fixed on the same element, and the description thereof is omitted.

As shown in Fig. 13, the apparatus of producing the optical fiber according to this embodiment has, between a resin application device 44a as a resin application means for applying the ultraviolet curable resin, and an ultraviolet irradiation unit 46e, an ultraviolet irradiation unit 46d as a heating means for heating the ultraviolet curable resin coated on the optical fiber, and a temperature measuring instrument 31.

As the heating means according to this embodiment, use may be made of: the ultraviolet irradiation unit 46d using the high pressure mercury lamp or the metal halide lamp as the light source. A temperature of the thus-heated ultraviolet curable resin is monitored by the temperature measuring instrument 31.

The ultraviolet irradiation unit 46d has a role as the heating means, and simultaneously a role as an ultraviolet irradiation means. By applying light from, as a first lamp, the ultraviolet irradiation unit having the high pressure mercury lamp as the light source, the ultraviolet curable resin can be heated by radiant heat, and the ultraviolet curable resin can be cured by the ultraviolet irradiation unit 46e in a heated state. Thus, when the ultraviolet curable resin is cured by the conventional high pressure mercury lamp or the like, the ultraviolet curable resin is provided with the radiant heat equal to or higher than 130°C, being significantly higher than the glass transition temperature (Tg).

According to this embodiment, the high pressure mercury lamp being conventional equipment can be used as the heating means, and thus this embodiment is advantageous in apparatus cost and has an advantage of no necessity of large modification of equipment.

This embodiment can be applied to both of the Wet-on-Wet system and the Wet-on-Dry system. When this embodiment is applied to the Wet-on-Dry system, as shown in Fig. 14, if an ultraviolet irradiation unit 46f as a heating unit for forming a coating having Young's modulus of 500 MPa or more is provided in an upper part of an ultraviolet irradiation unit 46g in the light irradiation step for the secondary layer, for example, such a provision is effective.

It is known that a defect occurs in quartz glass, if an optical fiber to which germanium is added is irradiated with light having a short wavelength band of 250 nm or less as the light source of the ultraviolet irradiation unit for forming the coating in the light irradiation step for the secondary layer, for example, a loss of the optical fiber is increased by occurrence of this defect in several cases. Moreover, an amount of radical photopolymerization initiator which efficiently absorbs light having a long wavelength of 400 nm or more is small, and the wavelength is close to a visible light region, and thus storage stability to indoor light may be lowered, in several cases, with an ultraviolet curable resin using a photopolymerization initiator to cause reaction in this wavelength. Accordingly, a wavelength of light emitted from the semiconductor light emitting element is preferably 300 nm or more, more preferably 300 nm or more and 405 nm or less, and further preferably 365 nm or more and 405 nm or less.

Moreover, as in the fourth embodiment, when the ultraviolet irradiation unit is used, as the light source, the high pressure mercury lamp or the metal halide lamp as the heating unit, a short wavelength cut filter (long-pass filter) to cut a wavelength of 300 nm or less is further preferably installed within the ultraviolet irradiation unit.

EXAMPLES

The present invention will be described in more detail based on examples given below, but the invention is not meant to be limited by these.

[Test examples using a film]

(Ultraviolet curable resin)

An ultraviolet curable resin in which a glass transition temperature (Tg) was adjusted to 80°C by adjusting a molecular weight or a substituent of the urethane acrylate. In addition, this Tg coincides with Tg of a film prepared by using a conveyor-type ultraviolet irradiation apparatus having an electrodeless UV lamp (D valve) described below. When a temperature Tx of this resin was determined by the above-described method, Tx was 45°C. Irgacure 184 was used as a photopolymerization initiator.

(Producing method of a cured film)

The ultraviolet curable resin was spin-coated on quartz glass to be 50 $\mu$m in thickness. The resin was cured, by putting the thus-prepared sample in a purge box under a nitrogen atmosphere, followed by irradiated with ultraviolet light (365 nm) with accumulated irradiation energy of 1,000 mJ/cm$^2$ in a conveyor-type ultraviolet irradiation apparatus mounted with an electrodeless UV lamp (D valve) or a line-type LED unit having a peak wavelength at 365 $\pm$ 10 nm.

Tg$_{LED}$ of a film prepared by irradiated with light from LED (at 25°C) without heating, was 45°C.

(Heating method)

When the resin was subjected to UV irradiation while the resin was heated, the resin was cured, by placing the thus-prepared sample on a rubber heater heated to a predetermined temperature, putting the resultant assembly in a purge box under a nitrogen atmosphere, and adjusting illuminance and velocity to be a predetermined accumulated quantity of light and being irradiated with ultraviolet light (365 nm) in a conveyor-type ultraviolet irradiation apparatus. A heating temperature was adjusted to 40°C, 60°C or 80°C.

(Measuring method of elastic modulus)

The resultant film was peeled from a glass substrate, cut into a 6 mm-wide strip shape into strips of film. A tensile test was conducted on this test piece under 23°C, and under conditions of a tensile speed of 1.0 mm/min and a gauge length of 25 mm by using a tensile tester (trade name "TRC, TENSILON Universal Tensile Testing Machine," manufactured by A&D Co., Ltd.), and Young's modulus was calculated from tensile strength at 2.5% strain.

(Test results)

As shown in Fig. 15, test results were about 600 MPa in a film elastic modulus of the coating resin cured by the LED lamp without heating (room temperature, 25°C), but this value is about a half of the elastic modulus of the film cured by the electrodeless UV lamp. Curing does not sufficiently progress by curing using the LED lamp only, even if the resin is irradiated with light in a accumulated quantity of light same with the quantity in the electrodeless UV lamp.
On the other hand, when the coating resin was subjected to UV irradiation while the coating resin was heated, an elastic modulus of the film obtained by curing the resin with UV while the resin was heated to a temperature of 60°C or 80°C being higher than Tx of the resin showed an elastic modulus equivalent to the elastic modulus of the film cured by the electrodeless UV lamp. Thus, it was confirmed that the curing sufficiently progressed.
When the resin was heated to a temperature of 40°C being lower than Tx of the resin, the elastic modulus was somewhat improved in comparison with the elastic modulus of a film cured at room temperature, but curability as high as the curability with the electrodeless UV lamp cannot be obtained.
Thus, also from this experiment, the heating temperature of the resin is preferably equal to or higher than the temperature Tx, and more preferably equal to or higher than the glass transition temperature Tg.

[Examples using an optical fiber]

An optical fiber was produced according to a production method in the second embodiment shown in Fig. 8, by using a production apparatus (Wet-on-Dry system) in which a primary layer and a secondary layer are separately coated according to the second embodiment. The detail thereof is described in Example 1 below.
Specifically, the optical fiber was produced, by using the apparatus equipped with heaters in an upper end and a lower end of a cylindrical body within an ultraviolet irradiation unit for curing the secondary layer, and changing heater temperatures, to measure Young's modulus of the secondary layer. In addition, as an ultraviolet curable resin for the secondary layer, use was made of two kinds of ultraviolet curable resins A or B in which Tg was different. The thus-obtained optical fiber is an optical fiber, in which the ultraviolet curable resins consisting of two layers of the primary layer (thickness 30 $\mu$m) and the secondary layer (thickness 30 $\mu$m), respectively, were coated on an outer circumference of the glass optical fiber bare wire, and cured.

(Ultraviolet curable resin for forming a primary layer)

An ultraviolet curable resin was prepared to be a coating resin, in which Young's modulus would be 2.0 MPa and a glass transition temperature (Tg) would be -30°C, by using an ultraviolet curable resin obtained by using polyether-based urethane acrylate as an oligomer, and adding a photopolymerization initiator, a photosensitizer or the like thereto.

(Ultraviolet curable resin for forming a secondary layer)

Ultraviolet curable resin A: an ultraviolet curable resin was used, in which a glass transition temperature (Tg) would be adjusted to 82°C by adjusting a molecular weight and a substituent of the urethane acrylate. When temperatures Tx and $Tg_{LED}$ of this resin were determined by the above-described method, Tx and $Tg_{LED}$ were 42°C and 46°C, respectively. Irgacure 184 and Lucirin TPO were used as a photopolymerization initiator.
Ultraviolet curable resin B: an ultraviolet curable resin was used, in which a glass transition temperature (Tg) would be adjusted to 98°C by adjusting a molecular weight and a substituent of the urethane acrylate. When temperatures Tx and $Tg_{LED}$ of this resin were determined by the above-described method, Tx and $Tg_{LED}$ were 54°C and 51 °C, respectively. Irgacure 184 and Irgacure OXE02 were used as a photopolymerization initiator.
Ultraviolet curable resin C: an ultraviolet curable resin was used, in which a glass transition temperature (Tg) would be adjusted to 80°C by adjusting a molecular weight and a substituent of the urethane acrylate. When temperatures Tx and $Tg_{LED}$ of this resin were determined by the above-described method, Tx and $Tg_{LED}$ were 45°C and 45°C, respectively. Irgacure 184 was used as a photopolymerization initiator.

(Light irradiation unit)

An ultraviolet irradiation unit was used, in which accumulated irradiation energy was 600 mJ/cm$^2$ and a region of width 30 mm × length 200 mm was served as a light irradiation region, by arranging, in one light irradiation unit body 61, 20 pieces of semiconductor light emitting elements 66 each having a peak wavelength at 365 ± 10 nm (trade name "6SMG," manufactured by Nichia Corporation, optical output 2W), along a running direction of the optical fiber.

(Measuring method of Young's modulus of a secondary layer)

A coating layer 14 of an optical fiber 10, as shown in Fig. 1, was scraped off, by using a cutter knife or the like, from an interface between an optical fiber bare wire 11 and a primary layer 12. A tensile test was conducted on this test piece under 23°C, and under conditions of a tensile speed of 1.0 mm/min and a gauge length of 25 mm by using a tensile tester (trade name "TRC, TENSILON Universal Tensile Testing Machine," manufactured by A&D Co., Ltd.), and Young's modulus was calculated from tensile strength at 2.5% strain. In addition, a measured value using a microscope was used as a cross-sectional area of the test piece. In this Example in which the optical fiber has the coating layer 14 consisting of the primary layer 12 and the secondary layer 13, Young's modulus of the primary layer 12 is sufficiently small in comparison with Young's modulus of the secondary layer 13, and thus the coating layer 14 is substantially regarded to have the Young's modulus of the secondary layer 13 without any problems.

The glass transition temperature (Tg) of the coating resin was measured by the above-described measuring method.

(Example 1)

The ultraviolet curable resin A was used, and a temperature of an ultraviolet light transmission cylindrical body in an ultraviolet irradiation unit was adjusted to 85°C by a ribbon heater. A surface temperature of a fiber coating resin came out from the ultraviolet irradiation unit was 70°C, which was equal to or higher than 42°C of a temperature Tx. As a result, Young's modulus of the secondary layer of the thus-obtained optical fiber was 1,100 MPa.

(Example 2) (reference example)

The ultraviolet curable resin B was used, and a temperature of an ultraviolet light transmission cylindrical body in an ultraviolet irradiation unit was adjusted to 90°C by a ribbon heater. A surface temperature of a fiber coating resin came out from the ultraviolet irradiation unit was 76°C, which was equal to or higher than 54°C of a temperature Tx. As a result, Young's modulus of the secondary layer of the thus-obtained optical fiber was 1,150 MPa as large as Example 1.

(Example 3)

The ultraviolet curable resin B was used, and a temperature of an ultraviolet light transmission cylindrical body in an ultraviolet irradiation unit was adjusted to 120°C by a ribbon heater. A surface temperature of a fiber coating resin came out from the ultraviolet irradiation unit was 108°C, which was equal to or higher than 98°C of a glass transition temperature Tg. As a result, Young's modulus of the secondary layer of the thus-obtained optical fiber was 1,210 MPa higher than Example 2.

(Example 4)

The ultraviolet curable resin C was used, an infrared heating unit was installed between a resin application device and an ultraviolet irradiation unit, and the ultraviolet curable resin was heated by infrared light. A surface temperature of a fiber coating resin came out from the ultraviolet irradiation unit was 85°C, which was equal to or higher than 80°C of a glass transition temperature Tg. As a result, Young's modulus of the secondary layer of the thus-obtained optical fiber was 1,000 MPa.

(Comparative example 1)

The ultraviolet curable resin A was used, and linear velocity was adjusted to be 1,000 mJ/cm$^2$ in irradiation energy, by using an electrodeless lamp (D valve) as a curing light source. A surface temperature of a fiber coating resin came out from the ultraviolet irradiation unit was 134°C, which was equal to or higher than 42°C of a temperature Tx. Young's modulus of the secondary layer of the thus-obtained optical fiber was 1,200 MPa.

(Comparative example 2)

An optical fiber was prepared in the same manner as in Example 1, without providing the ribbon heater being the heating means, and except by adjusting the linear velocity to be 1,000 mJ/cm$^2$ in irradiation energy of the light emitting diode. A surface temperature of a fiber coating resin came out from the ultraviolet irradiation unit was 32°C, which was less than 42°C of a temperature Tx. As a result, Young's modulus of the secondary layer of the thus-obtained optical fiber was 730 MPa, which was lower as compared with Example 1 using a heating means.

(Comparative example 3)

An optical fiber was prepared by using the ultraviolet curable resin B, under the same conditions as in Example 2, except that the light emitting diode being the light source of the light irradiation unit in Example 2 was changed to a Mercury-Xenon lamp (Hg-Xe). A surface temperature of a fiber coating resin came out from the ultraviolet irradiation unit was 140°C, which was equal to or higher than 54°C of a temperature Tx. As a result, Young's modulus of the secondary layer of the thus-obtained optical fiber was 1,310 MPa.

(Comparative example 4)

The ultraviolet curable resin B was used, the ultraviolet irradiation unit in Example 2 was replaced with a light emitting diode, and linear velocity was adjusted to be 1,000 mJ/cm$^2$ in irradiation energy. The heating means was not used in Comparative example 4. A surface temperature of a fiber coating resin came out from the ultraviolet irradiation unit was 30°C, which was less than 54°C of a temperature Tx. As a result, Young's modulus of the secondary layer of the thus-obtained optical fiber was 680 MPa, which was lower than Young's modulus as compared with Example 2 using a heating means.

(Comparative example 5)

An optical fiber was prepared in the same manner as in Example 4, without providing the infrared heating unit, and except by adjusting the linear velocity to be 600 mJ/cm$^2$ in irradiation energy of the light emitting diode. A surface temperature of a fiber coating resin came out from the ultraviolet irradiation unit was 30°C, which was less than 45°C of a temperature Tx. As a result, Young's modulus of the secondary layer of the thus-obtained optical fiber was 410 MPa, which was lower than Young's modulus as compared with Example 4 using a heating means.

The thus-obtained results are shown in Table 1 below.

Table 1

| | Optical fiber coating resin | | | Kind of light source | Equipped or unequipped with a heating means | Temperature of an optical fiber coating resin upon UV irradiation (°C) | Young's modulus of secondary layer (MPa) |
|---|---|---|---|---|---|---|---|
| | Kind of ultraviolet curable resin | Tg (°C) | Tx (°C) | | | | |
| Example 1 | A | 82 | 42 | LED | Equipped | 70 | 1,100 |
| Comparative example 1 | A | 82 | 42 | Electrodeless UV lamp | Unequipped | 134 | 1,200 |
| Comparative example 2 | A | 82 | 42 | LED | Unequipped | 32 | 730 |
| Example 2 | B | 98 | 54 | LED | Equipped | 76 | 1,150 |
| Example 3 | B | 98 | 54 | LED | Equipped | 108 | 1,210 |
| Comparative example 3 | B | 98 | 54 | Hg-Xe | Unequipped | 140 | 1,310 |
| Comparative example 4 | B | 98 | 54 | LED | Unequipped | 30 | 680 |
| Example 4 | C | 80 | 45 | LED | Equipped | 85 | 1,000 |

(continued)

| | Optical fiber coating resin | | | Kind of light source | Equipped or unequipped with a heating means | Temperature of an optical fiber coating resin upon UV irradiation (°C) | Young's modulus of secondary layer (MPa) |
|---|---|---|---|---|---|---|---|
| | Kind of ultraviolet curable resin | Tg (°C) | Tx (°C) | | | | |
| Comparative example 5 | C | 80 | 45 | LED | Unequipped | 30 | 410 |

As shown in Table 1, in Comparative Example 1 in which the electrodeless lamp was used as the conventional ultraviolet light source, Young's modulus of the secondary layer was 1,200 MPa, and in Comparative Examples 3 in which the Mercury-Xenon lamp was used, Young's modulus thereof was 1,310 MPa, and a high elastic modulus was obtained as in the secondary layer.

Then, in Comparative Example 2 or Comparative Example 4 in which the light emitting diode (LED) was used as the ultraviolet light source and no heating means was used, Young's moduli of the secondary layers were 730 MPa and 680 MPa, and lowered to about 61% and about 52%, respectively, in comparison with a case where the electrodeless lamp was used (Comparative Example 1) and a case where the Mercury-Xenon lamp was used (Comparative Example 3).

In contrast, in Example 1 in which the ultraviolet curable resin A was used, the light emitting diode was used as the ultraviolet light source, further the heating means was provided, and the heating temperature was adjusted to be equal to or higher than Tx, Young's modulus of the secondary layer was achieved 1,100 MPa, and the Young's modulus substantially equivalent to the level when the metal halide lamp was used (Comparative Example 1) was obtained. Moreover, in Example 2 in which the ultraviolet curable resin B was used and the heating temperature was adjusted to be equal to or higher than Tx, Young's modulus of the secondary layer was achieved 1,150 MPa, resulted in the Young's modulus of about 90% of the level when the Mercury-Xenon lamp was used (Comparative Example 3). Moreover, in Example 3 in which the heating temperature was adjusted to be equal to or higher than the glass transition temperature (Tg), Young's modulus of the secondary layer was achieved 1,210 MPa, resulted in the Young's modulus substantially equivalent to the level when the Mercury-Xenon lamp was further used (Comparative Example 3).

In addition, when the light emitting diode was used as the light source for curing the resin, power consumption was able to be significantly reduced, and further a longer life of the light source was able to be achieved, in comparison with the case where the electrodeless lamp or the Mercury-Xenon lamp was used (Comparative Example 1 or 3).

Having described our invention as related to the present embodiments, it is our intention that the invention not be limited by any of the details of the description, unless otherwise specified, but rather be construed broadly within its spirit and scope as set out in the accompanying claims.

This application claims a priority on Patent Application No. 2014-133321 filed in Japan on June 27, 2014, which is entirely herein incorporated by reference.

REFERENCE SIGNS LIST

10 Optical fiber
11 Optical fiber bare wire
12 Primary layer
13 Secondary layer
14 Coating layer
21 Optical fiber preform
22 Heater
23 Optical fiber bare wire
24a, 26b, 44a, 44b, 44c Resin application device
25 Optical fiber
26a, 26b, 26c, 46a, 46b, 46c, 46d, 46e, 46f, 46g, 46h, 46i Ultraviolet irradiation unit
27 Guide roller
28 Winding device
29 Heating unit
31 Temperature measuring instrument

51 Control unit
52 Die unit
53 Die holder
53b Heater
54, 55 Resin supplier
54b, 55b Pump
54c, 55c Supply pipe
61 Ultraviolet irradiation unit body
62 Intake device
63 Exhaust device
64 Insertion opening
65 Ultraviolet light transmission cylindrical body
66 Semiconductor light emitting element
67 Light collection optical system
68 Mirror
69 Heater
70 Control unit

**Claims**

1. A method of producing an optical fiber, comprising:

   (a) a resin application step of applying an ultraviolet curable resin, onto an outer circumference of an optical fiber;
   (b) a heating step of heating the ultraviolet curable resin; and
   (c) a light irradiation step of irradiating the ultraviolet curable resin with ultraviolet light emitted from a semiconductor light emitting element, in a state in which the ultraviolet curable resin is heated, to cure the ultraviolet curable resin into a coating resin;

   wherein a temperature, at which the ultraviolet curable resin is heated, is equal to or higher than the glass transition temperature of the coating resin; and
   wherein the light irradiation step is different from the heating step; wherein the glass transition temperature is a temperature at a maximal point of tan $\delta$, which is obtained by the following formula:

$$\tan \delta = (\text{loss elastic modulus E''})/(\text{storage elastic modulus E'})$$

   wherein the loss elastic modulus E" and the storage elastic modulus E' are obtained by the following method:

   first, an ultraviolet curable resin before curing is applied onto a glass plate at a thickness of 0.050 mm by a bar coater, and the resultant assembly is irradiated with ultraviolet light to be 1.0 J/cm$^2$ by a FUSION lamp, whereby the resin is subjected to photopolymerization on the glass plate and cured into a film form;
   then, this film is cut into a 6 mm-wide strip of films, and viscoelasticity is measured at a heating rate of 5°C/min in the temperature range of -100°C to 150°C, by using a dynamic viscoelasticity measuring instrument RSA3.

2. The method of producing an optical fiber as claimed in claim 1, wherein ultraviolet light emitted from the semiconductor light emitting element has a single peak wavelength or a plurality of peak wavelengths.

3. The method of producing an optical fiber as claimed in claim 1 or 2, wherein the ultraviolet curable resin comprises urethane (meth)acrylate, and a photopolymerization initiator having an absorption region in a wavelength region of ultraviolet light emitted from the semiconductor light emitting element.

4. The method of producing an optical fiber as claimed in any one of claims 1 to 3, wherein a wavelength of ultraviolet light emitted from the semiconductor light emitting element is 300 nm or more.

5. An apparatus of producing an optical fiber, comprising:

(a1) a resin application means for applying an ultraviolet curable resin, onto an outer circumference of an optical fiber; and

(a2) an ultraviolet irradiation unit comprising:

(b) a heating means comprising heaters (69) for heating the ultraviolet curable resin; and

(c) a light irradiation means comprising one or a plurality of semiconductor light emitting elements (66), wherein the heated ultraviolet curable resin is irradiated with ultraviolet light emitted from the semiconductor light emitting element, to cure the ultraviolet curable resin into a coating resin;

wherein the ultraviolet irradiation unit has an ultraviolet irradiation unit body (61), an intake device (62), an exhaust device (63), and a cylindrical body (65) through which ultraviolet light is transmitted;

wherein the intake device (62) and the exhaust device (63) each are provided with an insertion opening (64) into which an optical fiber (25) coated with an ultraviolet curable resin is inserted;

wherein the heaters (69) are located in an upper end and a lower end of the cylindrical body (65); and

wherein the apparatus of producing an optical fiber has a control unit (70), and a temperature measuring instrument (31) for measuring a temperature inside the cylindrical body (65).

6. The apparatus of producing an optical fiber as claimed in claim 5, wherein ultraviolet light emitted from the semiconductor light emitting element has a single peak wavelength or a plurality of peak wavelengths.

**Patentansprüche**

1. Verfahren zur Herstellung einer optischen Faser, umfassend:

(a) einen Harzauftragungsschritt zum Auftragen eines durch Ultraviolettstrahlen härtbaren Harzes auf einen Außenumfang einer optischen Faser;

(b) einen Erwärmungsschritt zum Erwärmen des durch Ultraviolettstrahlen härtbaren Harzes; und

(c) einen Lichtbestrahlungsschritt zum Bestrahlen des durch Ultraviolettstrahlen härtbaren Harzes mit ultraviolettem Licht, das von einem lichtemittierenden Halbleiterelement emittiert wird, in einem Zustand, in dem das durch Ultraviolettstrahlen härtbare Harz erhitzt wird, um das durch Ultraviolettstrahlen härtbare Harz zu einem Beschichtungsharz zu härten;

wobei eine Temperatur, bei der das durch Ultraviolettstrahlen härtbare Harz erhitzt wird, gleich oder höher als die Glasübergangstemperatur des Beschichtungsharzes ist; und

wobei sich der Lichtbestrahlungsschritt vom Erwärmungsschritt unterscheidet;

wobei die Glasübergangstemperatur eine Temperatur bei einem maximalen Punkt von tan δ ist, die durch die folgende Formel erhalten wird:

$$\tan \delta = (\text{Verlustelastizitätsmodul E''}) / (\text{Speicherelastizitätsmodul E'})$$

wobei der Verlustelastizitätsmodul E'' und der Speicherelastizitätsmodul E' durch das folgende Verfahren erhalten werden:

zunächst wird ein durch Ultraviolettstrahlen härtbares Harz vor dem Härten mit einem Bar Coater in einer Dicke von 0,050 mm auf eine Glasplatte aufgebracht, und die resultierende Anordnung wird mit ultraviolettem Licht einer FUSION-Lampe mit 1,0 J / cm$^2$ bestrahlt, wodurch das Harz einer Photopolymerisation auf der Glasplatte unterzogen wird und zu einer Filmform ausgehärtet wird;

anschließend wird diese Folie in einen 6 mm breiten Folienstreifen geschnitten und die Viskoelastizität mit einer Aufheizrate von 5 °C / min im Temperaturbereich von - 100 °C bis 150 °C unter Verwendung eines die dynamische Viskoelastizität messenden Instruments RSA3 gemessen.

2. Verfahren zur Herstellung einer optischen Faser nach Anspruch 1, wobei das von dem lichtemittierenden Halbleiterelement emittierte ultraviolette Licht eine einzelne Spitzenwellenlänge oder mehrere Spitzenwellenlängen aufweist.

**3.** Verfahren zur Herstellung einer optischen Faser nach Anspruch 1 oder 2, wobei das durch Ultraviolettstrahlen härtbare Harz Urethan(meth)acrylat und einen Photopolymerisationsinitiator mit einem Absorptionsbereich in einem Wellenlängenbereich von ultraviolettem Licht, das von dem lichtemittierenden Halbleiterelement emittiert wird, umfasst.

**4.** Verfahren zur Herstellung einer optischen Faser nach einem der Ansprüche 1 bis 3, wobei eine Wellenlänge von ultraviolettem Licht, das von dem lichtemittierenden Halbleiterelement emittiert wird, 300 nm oder mehr beträgt.

**5.** Vorrichtung zum Herstellen einer optischen Faser, umfassend:

(a1) ein Harzauftragsmittel zum Auftragen eines durch Ultraviolettstrahlen härtbaren Harzes auf einen Außenumfang einer optischen Faser; und
(a2) eine Ultraviolettbestrahlungseinheit, umfassend
(b) eine Heizeinrichtung die Heizungen (69) zum Erhitzen des durch Ultraviolettstrahlen härtbaren Harzes umfasst; und
(c) Lichtbestrahlungsmittel, umfassend ein oder mehrere lichtemittierende Halbleiterelemente (66), wobei das erhitzte durch Ultraviolettstrahlen härtbare Harz mit emittiertem Ultraviolettlicht bestrahlt wird, um das durch Ultraviolettstrahlen härtbare Harz zu einem Beschichtungsharz zu härten,

wobei die Ultraviolettbestrahlungseinheit einen Ultraviolettbestrahlungseinheitskörper (61), eine Einlassvorrichtung (62), eine Auslassvorrichtung (63) und einen zylindrischen Körper (65) aufweist, durch den ultraviolettes Licht übertragen wird;
wobei die Einlassvorrichtung (62) und die Auslassvorrichtung (63) jeweils mit einer Einführöffnung (64) versehen sind, in die eine Lichtleitfaser (25) eingeführt ist, die mit einem durch Ultraviolettstrahlen härtbaren Harz beschichtet wird;
wobei die Heizungen (69) in einem oberen Ende und einem unteren Ende des zylindrischen Körpers (65) angeordnet sind; und
wobei die Vorrichtung zum Herstellen einer optischen Faser eine Steuereinheit (70)
und ein Temperaturmeßgerät (31) zum Messen einer Innentemperatur des zylindrischen Körpers (65) aufweist.

**6.** Vorrichtung zur Herstellung einer optischen Faser nach Anspruch 5, wobei das vom lichtemittierenden Halbleiterelement emittierte Ultraviolettlicht eine einzige Spitzenwellenlänge oder eine Vielzahl von Spitzenwellenlängen aufweist.

**Revendications**

**1.** Procédé de production d'une fibre optique, comprenant:

(a) une étape d'application de résine consistant à appliquer une résine durcissable aux ultraviolets, sur une circonférence extérieure d'une fibre optique;
(b) une étape de chauffage consistant à chauffer la résine durcissable aux ultraviolets; et
(c) une étape d'irradiation de lumière consistant à irradier la résine durcissable aux ultraviolets avec de la lumière ultraviolette émise par un élément électroluminescent à semi-conducteur, dans un état dans lequel la résine durcissable aux ultraviolets est chauffée, pour durcir la résine durcissable aux ultraviolets en une résine de revêtement;

dans lequel une température, à laquelle la résine durcissable aux ultraviolets est chauffée, est égale ou supérieure à la température de transition vitreuse de la résine de revêtement; et
dans lequel l'étape d'irradiation de lumière est différente de l'étape de chauffage;
dans lequel la température de transition vitreuse est une température à un point maximal de tan $\delta$, qui est obtenue par la formule suivante:

```
tan δ = (module élastique de perte E'') / (module
élastique de stockage E')
```

dans lequel le module élastique de perte E" et le module élastique de stockage E' sont obtenus par le procédé suivant:

tout d'abord, une résine durcissable aux ultraviolets avant durcissement est appliquée sur une plaque de verre à une épaisseur de 0,050 mm par un dispositif d'enduction à barres, et l'ensemble résultant est irradié avec une lumière ultraviolette à 1,0 J / cm$^2$ par une lampe FUSION, grâce à quoi la résine est soumise à la photopolymérisation sur la plaque de verre et durci sous forme de film;

ensuite, ce film est découpé en une bande de films de 6 mm de large, et la viscoélasticité est mesurée à une vitesse de chauffage de 5 °C / min dans la plage de température de - 100 °C à 150 °C, en utilisant un instrument RSA3 de mesure de la viscoélasticité dynamique.

2. Procédé de production d'une fibre optique selon la revendication 1, dans lequel la lumière ultraviolette émise par l'élément électroluminescent à semi-conducteur a une seule longueur d'onde de crête ou une pluralité de longueurs d'onde de crête.

3. Procédé de production d'une fibre optique selon la revendication 1 ou 2, dans lequel la résine durcissable aux ultraviolets comprend du (méth)acrylate d'uréthane et un initiateur de photopolymérisation ayant une région d'absorption dans une région de longueur d'onde de la lumière ultraviolette émise par l'élément électroluminescent à semi-conducteur.

4. Procédé de production d'une fibre optique selon l'une quelconque des revendications 1 à 3, dans lequel une longueur d'onde de lumière ultraviolette émise par l'élément électroluminescent à semi-conducteur est de 300 nm ou plus.

5. Appareil de production d'une fibre optique, comprenant:

(a1) un moyen d'application de résine pour appliquer une résine durcissable aux ultraviolets, sur une circonférence extérieure d'une fibre optique; et
(a2) une unité d'irradiation ultraviolette comprenant:

(b) un moyen de chauffage comprenant des éléments chauffants (69) pour chauffer la résine durcissable aux ultraviolets; et
(c) un moyen d'irradiation de lumière comprenant un ou une pluralité des éléments électroluminescents à semi-conducteur (66), dans lesquels la résine durcissable aux ultraviolets chauffée est irradiée avec de la lumière ultraviolette émise par l'élément électroluminescent à semi-conducteur, pour durcir la résine durcissable aux ultraviolets en une résine de revêtement;

dans lequel l'unité d'irradiation ultraviolette a un corps d'unité d'irradiation ultraviolette (61), un dispositif d'admission (62), un dispositif d'échappement (63) et un corps cylindrique (65) à travers lequel la lumière ultraviolette est transmise;

dans lequel le dispositif d'admission (62) et le dispositif d'échappement (63) sont chacun pourvu d'une ouverture d'insertion (64) dans laquelle une fibre optique (25) revêtue d'une résine durcissable aux ultraviolets est insérée;

dans lequel les éléments chauffants (69) sont localisés dans une extrémité supérieure et une extrémité inférieure du corps cylindrique (65); et

dans lequel l'appareil de production d'une fibre optique a une unité de commande (70), et un instrument de mesure de température (31) pour mesurer une température à l'intérieur le corps cylindrique (65).

6. Appareil de production d'une fibre optique selon la revendication 5, dans lequel
la lumière ultraviolette émise par l'élément émetteur de lumière à semi-conducteur a un seul longueur d'onde de crête ou plusieurs longueurs d'onde de crête.

*Fig. 1*

*Fig. 2*

*Fig. 3*

*Fig. 4*

*Fig. 5*

*Fig. 6*

*Fig. 7*

*Fig. 8*

*Fig. 9*

*Fig. 10*

27

Fig. 11

Fig. 12

Fig. 13

Fig. 14

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010117531 A
- JP 2011256331 A
- JP 2010264603 A
- WO 2011075549 A1
- JP H09156965 A
- JP 2003089555 A
- JP 2014133321 A